Europäisches Patentamt

**European Patent Office**

**Office européen des brevets**

(11) Publication number: **0 276 223 B1**

# EUROPEAN PATENT SPECIFICATION

(45) Date of publication of patent specification: **01.04.92**    (51) Int. Cl.⁵: **A01C 23/00**

(21) Application number: **86906977.3**

(22) Date of filing: **06.11.86**

(86) International application number:
**PCT/SE86/00508**

(87) International publication number:
**WO 87/02861 (21.05.87 87/11)**

(54) **DISTRIBUTION METHOD AND DISTRIBUTION DEVICE FOR PERFORMING THE METHOD.**

(30) Priority: **07.11.85 SE 8505255**

(43) Date of publication of application:
**03.08.88 Bulletin 88/31**

(45) Publication of the grant of the patent:
**01.04.92 Bulletin 92/14**

(84) Designated Contracting States:
**AT BE CH DE FR GB IT LI LU NL SE**

(56) References cited:
**CH-A- 1 115 600**
**DE-A- 1 782 004**
**DE-B- 1 020 477**
**DK-B- 117 188**

(73) Proprietor: **HYDRO SUPRA AKTIEBOLAG**
**Storgatan 24 P.O. Box 516**
**S-261 24 Landskrona(SE)**

(72) Inventor: **BERTILSSON, Göte**
**P.O. Box 552**
**S-244 03 Dösjebro(SE)**

(74) Representative: **Holmqvist, Lars J.H.**
**Lars Holmqvist Patentbyra AB Box 4289**
**S-203 14 Malmö 4(SE)**

## Description

Technical field

The present invention relates to a method and a device for discharging and distributiong fluid or pulverulent material, and the device is especially intended for irrigation and for addition of plant nutrient, means of control, etc. within horticulture and agriculture.

Prior art

Existing irrigation devices within agriculture are e.g. water canons and "sprinklers", which throw out the water under a substantial pressure from a revolving nozzle. The scattering pattern becomes circular or sector-shaped and the nozzle means is moved over the field area to be irrigated. Moreover, there are self-running "sprinklers", substantially intended for horticulture.

However, these kinds of irrigation devices irrigate unevenly. The water stream which is pressed out from the nozzle with great force, is sensitive to winds and also to evaporation. This causes an uneven irrigation and also entails a waist of water. The uneveness makes them unsuitable for feeding out plant nutrient.

Furthermore, there are irrigation ramps comprising a bar with nozzles being able to move in a circle or laterally. These nozzles provides an even distribution and can be used for completely solved plant nutrient substances. However, the nozzles are fine and are clogged by unsolved residues and contaminations.

None of these devices can be used for ordinary fertilizers. Neither is it possible by means of these devices to check or control the distribution.

Moreover, the following is previously known.

SE patent specification 7508856-7 (publication No. 429,084) discloses a method and a device for distributing liquid material, substantially chemical substances like means of control and plant nutrient. The device operates in such a way that liquid material is added to a rotating disc, which functions as a centrifugal unit and throws the liquid material in the form of droplets out from the periphery of the disc. Around the rotating disc a cylindrical mask is arranged, which has an annular portion with slots at the top. Some of the droplets from the periphery of the rotating disc pass through the slots and give rise to a specific spray pattern. The slot pattern can be designed in different ways depending on the spray patterns one wishes to achieve.

The portion of the liquid material which does not pass through the slots can either be returned to the feeding conduits or be transferred to a second, however, unmasked disc. The device is adjusted so that both spray patterns give the desired distribution of the material in question to the ground.

The distribution, by means of this device, is like the previously mentioned both sensitive to winds as well as sensible to evaporation and no dosage control exists.

DE 1,020,477 describes a device for distribution of a manure suspension. The device comprises a suction pipe, which runs between a manure mixture tank and a cylindrical pump body with circumferential tube connections. Closely connected to the inner wall of the pump body is a cylindrical control ring with openings and the ring can be rotated in relation to the pump body by means of a handle. The circumferential tube connections of the pump body are exended by rubber hoses and additional tube portions. The openings of the ring correspond, with regard to size, to the openings of the tube connections.

The pump wheel is e.g. driven by means of a tractor connected to the device via a shaft, and the manure is sucked into the device through the suction pipe and portioned in the pump body out into the tubes. By rotating the inner ring and in this way obstruct smaller or larger portions of the openings the amount of portioned manure can be controlled.

The device according to the German patent specification uses stable manure, which is a semi-liquid mass. This solution would be completely out of use when it comes to water distribution. Moreover, it seems to be a very delicate construction, where minor wear or damage effects the dosage.

DK 117 188 refers to a distribution device for liquid fertilizers or fertilizer suspensions. The liquid or suspension is fed centrally to a plain double disc rotor and is thrown out from the periphery of the discs by the centrifugal force (cf the previously mentioned SE 7508856-7). The new and inventiv with this danish patent is a shield partly covering the rotor and a collecting tank for catching a portion of the liquid or suspension and bringing it back to the disc rotor. As mentioned earlier a main drawback with this type of centrifugal distribution is uneven distribution and a further drawback is possible suspension segregation.

DE 1 782 004 describes a distribution device for liquid manure with a central stationary feeding. The centrally fed manure is distributed into compartments and from there on to the ground through a number of pipes. The central distribution makes it impossible to separately add additional agents.

CA patent No 1 115 600 is similar to the above mentioned DE 1 782 004 showing a distribution device for liquid fertilizer with a central stationary feeding.

Today the addition of plant nutrient within agriculture is primarily accomplished by means of tractor-driven fertilizing distributors.

Plant nutrient supplied together with water has a guaranteed effect compared to addition of plant nutrient first and subsequent addition of water.

If water and plant nutrient are discharged in combination the cultivating system is under best possible control, where the plant nutrient may be distributed in a correct way during different vegetation periods and further addition of plant nutrient and/or water or combinations thereof can easily be made.

For this reason a device is needed which can portion a liquid flow into several, predetermined fractional streams. Furthermore it should be unsensitive to contaminations and have low energy pressure requirements.

Summary of the invention

An object of the present invention is to eliminate the abovementioned disadvantages by providing a method and a distribution device for carefully controlled discharge of liquid or pulverulent material.

Another object of the present invention is to provide a method and a distribution device, whereby an economical discharge is achieved both from the view of water and energy. It is hereby important that a high pressure is not required.

These objects are achieved by means of a method for discharge of liquid or pulverulent material, to a number of compartments wherein a flow of liquid or pulverulent material is divided into an optional number of predetermined well defined partial streams, whereby the flow of liquid or pulverulent material is discharged from a horizontally positioned rotor unit by way of at least one outlet opening passing over the number of compartments dividing the flow of liquid or pulverulent material into predetermined well defined partial streams.

To achieve the above objects a distribution device for discharge of liquid or pulverulent material is further arranged comprising a casing with compartments therein; and outlets from each one of the compartments, whereby it further comprises a horizontally positioned rotor unit through which the liquid or pulverulent material is discharged and which shows at least one outlet opening that passes over each compartment.

Brief summary of the drawings

Fig. 1 is a schematic view of an embodiment of the device according to the invention.

Fig. 2 is a schematic detail view from above of an embodiment of the casing of the device according to the invention.

Fig. 3 is a schematic detail view, seen from above, of an additional embodiment of the casing of the device according to the invention.

Fig. 4 is a schematic detail view of the rotor unit of the device according to the invention.

Detailed description of the invention

The present invention defines a method and a device for discharge and distribution of liquid or pulverulent material.

By liquid material is intended both pure liquids and liquids containing solved or suspended material. Especially water or aqueous solutions are intended.

With pulverulent material is intended finely pulverizated material as well as granulate.

The invention is especially intended for irrigation and feeding of plant nutrient, means of control, liming agents and similar to the ground within horticulture and agriculture.

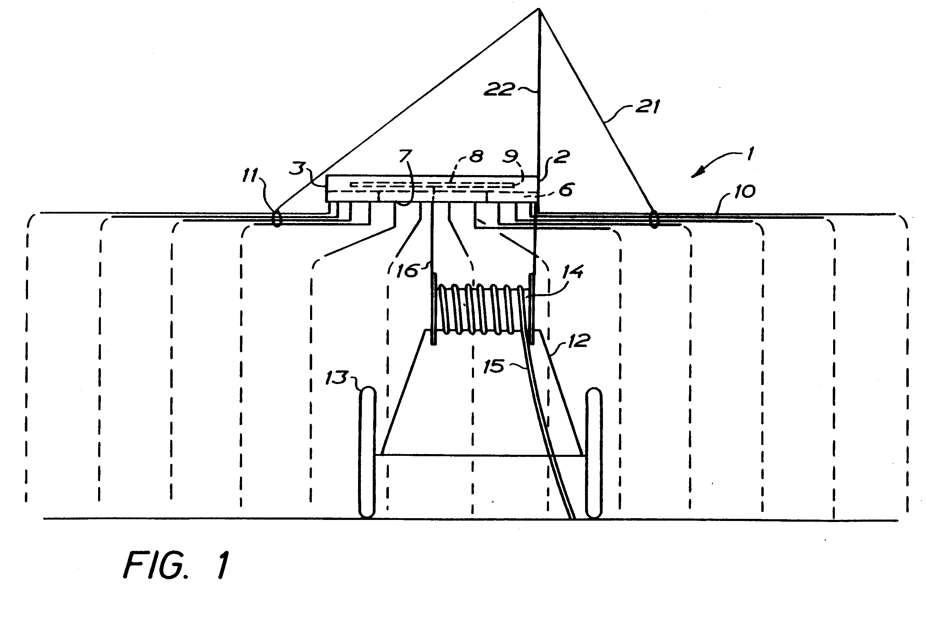

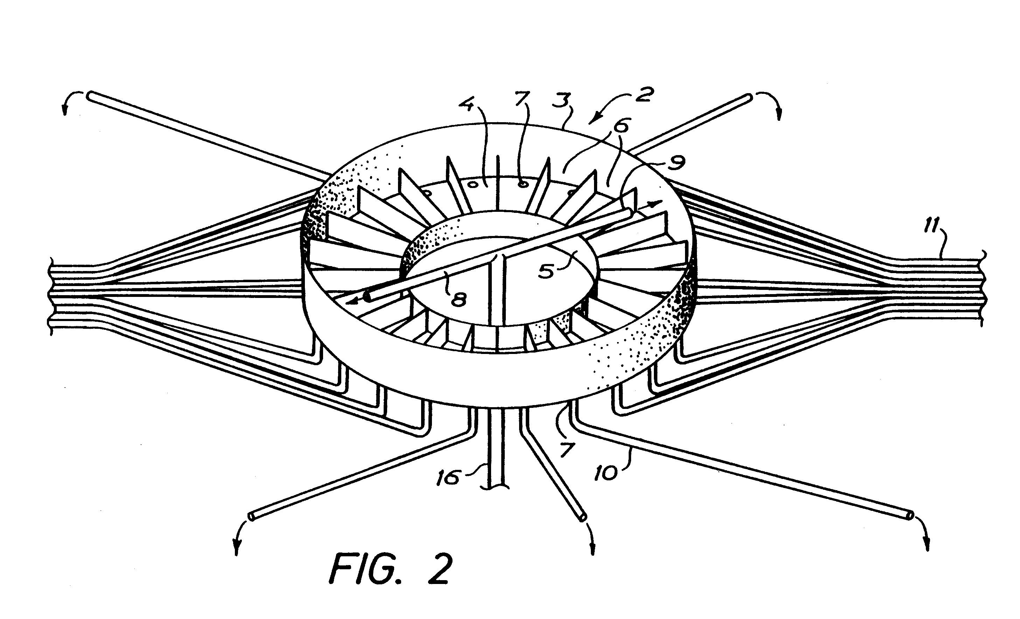

An embodiment of a distribution device according to the present invention is shown in Figs. 1 and 2 and the device itself is designated with the number 1.

The distribution device 1 comprises a framing 12, 13 provided with wheels, on which framing a casing 2 is arranged. In the centre of the casing a rotor 8 is horizontally positioned, with at least one outlet opening 9 applied via a shaft 16 and suitable couplings. The casing 2 which best appear from Fig. 2 comprises a circumferential jacket 3, an annular, possibly outwardly sloping bottom plate 4 and a vertically upwardly from the bottom plate extending inner ring 5, whereby the height of the jacket exceeds the height of the inner ring. The casing is divided into a plurality of predetermined and well defined compartments 6.

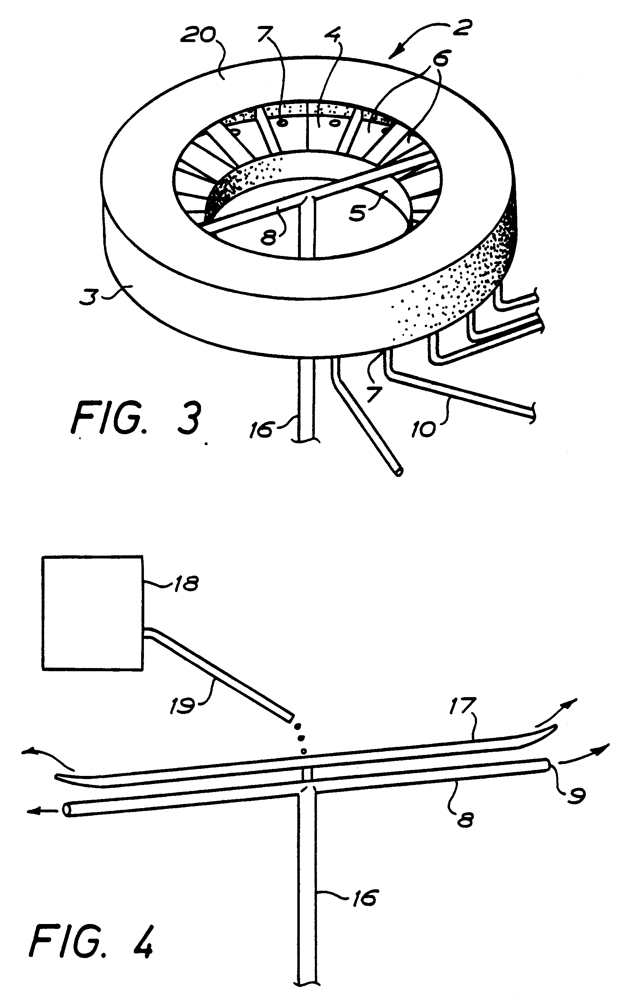

Fig. 2 shows an embodiment of the casing where the compartments are upwardly open and Fig. 3 shows an additional embodiment where the compartments are partly covered by a shield 20. The aim of the shield 20 is mainly to prevent squirting. The casing may of course also be shaped in other ways. In the bottom of each compartment adjacent the side jacket there is an outlet 7 to which a tube 10 is connected. The tubes 10 from the various compartments 6 are bundled so that they together form two outwardly running side arms or ramps 11. The tubes have different lengts so that their outlets are spaced from each other along the two ramps. The distance between the outlets are adjusted in order to achieve the desired distribution. Instead of tubes open grooves may be used.

All coupling details, openings and tubes are constructed with a substantial diametre and inclination to prevent obstruction and sedimentation and the diametre may of course vary from one application to the other.

Under the casing itself a bobin or drum 14 is provided for winding up a irrigation hose 15. From the framing 12 and straight upwardly a bar 22 extends, wherein cords or wires 21 are attached. The opposite end of the cords are attached around the ramps 11 in order to support them and prevent them from being pressed down against the ground.

The distribution device according to the invention functions according to the following during mere irrigation.

Water from a water terminal with a water pressure of around 1-2 kg, is fed to the rotor 8 by means of the hose 15, whereby the rotor is rotated. Thereby the water is distributed evenly in the various compartments and from these compartments, by self-flowing, the water runs out in the ramps 11 through the outgoing tubes 10 and are fed to the ground. The tubes end at a distance from each other along the ramps, which give an even distribution of water along the whole width of the device. Alternatively an aqueous nutrient solution or nutrient suspension may be pumped directly to the rotor by means of a suitable pump system.

The distribution device can be stationary or self-running, in which case the rotor 8 is used for distribution of the fluid as well as for propulsion of the device. The propulsion can be made in a known way, e.g. by having the rotor driving the drum 14 by means of the vertical shaft 16 and gears (not shown). After connection of the water hose to a terminal and pulling out the distribution device to a suitable starting point the hose 15 will be winded up around the drum being rotated by the rotor. The device is then advanced until the water hose is completely winded up. If desired, the device can be provided with an automatic cut-off, which is also known per se.

The advancing can also be accomplished by winding up a cord, whereby the hose passively is drawn out.

The ratio between the power from the rotor being extracted for the propulsion and the power being used for the distribution is adjusted so that desired result is achieved. For optimal drive function the rotor is suitably shaped so that the outlets are directed tangentially. The rotor can e.g. also be shaped as a balance wheel for superposing of energy, which will be discussed further below.

A special advantage with the distribution device according to the invention is that it can also be used for achieving an exact control of the propulsion rate and therewith of the amount discharged, i.e. dosage control. This can either be made quite mechanically or also electronically. However the basic principle for control is the same; one of the well defined partial streams is captured in a metering device and at a certain amount the device is released and emptied. This releasement can then further be used as a control signal. At mechanical dosage control this may e.g. be made in the following way.

A rotatable cross with a horizontal shaft is provided with four meter vessels and the cross is applied on the distribution device so that one of the meter vessels receives a partial stream. When the meter vessel which is in working position, i.e. is filled, have achieved a certain weight, it is released by means of a weight- or spring-loaded bar and the cross is rotated a quarter of a revolution. A new meter vessel will then be in a working position. At the rotation a bar is actuated which activates the driving so that a suitable drive shaft rotates one revolution, and thereafter the drive mechanism runs idle until a new meter vessel is released. The propulsion energy can, if desired, be stored to the driving periods by superposing the rotation energy in the rotor, e.g. by means of a balance wheel.

At electronical control the releasement of a bar can give an electric signal.

In this way a connection between the amount of discharged material and acreage is achieved, which is independent of pressure and flow rate. Naturally the meter devices must be able to endure suspended material without function disturbances.

An especially important embodiment of the device according to the invention is when addition of water as well as plant nutrient, liquid and solid, is desired and where the supply to the rotor of plant nutrient takes place separately from the supply of water. Such a distribution device is equipped with a rotor unit apparent from Fig. 4 and where the rotor 8 on its top surface has been provided with a groove 17. Alternatively it may be a tube with a supply opening or a disc. In this embodiment the distribution device 1 is provided with an additional container or supply unit 18 equipped with a feed pipe 19. This unit 18 is attached to the distribution device in such a way that the outlet opening of the feed pipe 19 ends centrally in connection with the groove 17. The nutrient solution, the granulated fertilizer or the nutrient powder or similar which is to be discharged together with the water is then kept in the supply unit 18 and the material is fed out via the feed pipe 19 to the groove. The discharge of plant nutrient to the compartments then takes place parallel with the water discharge in the rotor itself, while the discharge from the compartments to the tubes are common. The distribution of the nutrient will in this way be completely controlled and even just like the water distribution.

When plant nutrient is to be fed in a large scale the embodiment with the groove is inconvenient. For this purpose the plant nutrient, in the form of the granulate or suspension, may be supplied directly to the water conduit, as far as possible from the distribution point to permit the granulate to dissolve. A small water stream is taken out from the water conduit, it is mixed with the nutrient and subsequently brought back to the water conduit.

A further embodiment of the invention is an embodiment where pulverulent material, e.g. pulverulent plant nutrient is added to the rotor driven by means of an external driving device. From the compartments the fertilizer is transferred by means of an air stream. The control device or the dosage device can in such a case be constructed e.g. so that a partial stream, after air separation, may end in the container of an electrical balance. The collection takes place under a certain time period or under a certain distance of way. The impulses of the electrical balance is taken care of by means of a computer during the time necessary to have a sufficient acceptably mean value. The value is registered and this value is then used to control the discharge. Of course the partial powder stream may be weighed by means of a mechanical balance.

Dosage control is possible thanks to the precise distribution of material or liquid among the different compartments and thus it can be performed in many different ways.

As mentioned previously the distribution device can be constructed as a self-running model as well as a stationary model. The stationary models can e.g. be used for distribution of plant nutrient in a green-house or for sample extraction (partition) of inhomogenous bulk goods.

A further application of the present invention is to feed pregerminated grains directly from a tractor. In this case the distribution device according to the invention is arranged on the tractor and the rotor 8 is constructed with one or more outlets 9 being sufficiently large to prevent the grains from being discrupted.

Except for the use within agriculture and at garden cultivations the invention may also be used within parks, sports grounds, special cultivations etc.

The embodiment of the casing itself as well as the embodiment of the compartments are not especially critical. What the compartments concern it is only essential that they have an precise collection area (casing sector). The compartments do not necessarily need to be equal and one can e.g. imagine that in the case when one has rather large compartments one divides are compartment into smaller equal portions in order to withdraw a partial control current from one of these compartment portions. This is made in order not to have too great a partial control current.

The rotor may also be constructed in different ways. The embodiment that is shown by the figures is a rotor 8 with two openings 9, but the rotor may also be constructed with only one or more openings.

Suitably the distribution device is formed in such a way that the casing 2 itself with the various compartments 6 is easily exchangable in order to use the same device for different materials and dosage.

Fertilizers, liming agents and possibly other agents may be suspended in the water. Moreover, it is possible by means of the device according to the invention to discharge urine, waste water, liquid manure etc. A further development can be considered, where a stable manure suspension (liquid manure) after distribution may run forward in open conduits. In the case of a suspension it is important that all the tubes and tube couplings are shaped in such a way that they are not obstructed. Since the liquid or the powder is self-running from the various compartments one does not need especially narrow outlet hoses. The most critical part in this connection is however the feeding to the rotor, whereby the water in spite of all must have a certain pressure in order to drive the motor. By the fact that the pressure fall is concentrated to one or several outlets the opening remains relatively large and unsensitive to contaminations. Possible tendency to obstruction leads to raise of pressure, whereby the contamination tends to be pressed out. The water pressure necessary to drive the rotor and furthermore for the driving is thus relatively low, generally between 1-2 kg, and this is a great advantage compared to the devices which are used today.

Special advantages with the present invention are:

- effective feeding of plant nutrient, and liberty of choice regarding original form of the nutrient (solid, liquid, suspension).
- dosage control of water as well as plant nutrient etc.
- control of the feeding of plant nutrient in the time as required.
- maximal water- and energy efficiency, due to small evaporation losses and non-increased pressure.

A number of examples are given below which further illustrate the invention.

EXAMPLE 1

A distribution device of the kind apparent from Figs. 1 and 2 were tested for irrigation of a smaller agriculture areal. The ramp had a total, approximate width of 16 m and it gave a water amount of 5-20 mm, depending on transmission.

The device functioned well and the distribution of water became almost perfect.

Test have also been made, where solid urea or solid NPK 11.5.18 have been added via the water. No disturbances were noted and the distribution became even.

EXAMPLE 2

A somewhat smaller unit than the one according to Example 1 was tested. The casing had the embodiment shown in Fig. 3 and the rotor unit corresponded to that which is shown in Fig. 4. Via the conduit liquid fertilizer was added and via the rotor water was added. The ramp had a total width of about 7 m and gave a water amount of 20 l per minute.

The distribution of water as well as nutrients among the outlets became even.

The present invention can be modified in additional ways by a person skilled in the art and it is restricted only to the following claims.

**Claims**

1. Method of discharging a liquid or pulverulent material to a number of compartments (6) wherein a flow of liquid or pulverulent material is divided into an optional number of predetermined well defined partial streams, **characterized** in that the flow of liquid or pulverulent material is discharged from a horizontally positioned rotor unit (8) by way of at least one outlet opening (9) passing over the number of compartments (6) dividing the flow of liquid or pulverulent material into predetermined well defined partial streams.

2. Method according to claim 1, **characterized** in that the partial streams are essentially equal.

3. Method according to claims 1 or 2, **characterized** in that the flow consists of water or water with a suspended or dissolved material therein like fertilizers, means of control, limiting agents or similar.

4. Method according to claim 1 or 2, **characterized** in that the flow consists of a pulverulent material, whereby the rotor is driven externally and the partial streams are transferred by means of an air stream.

5. Method according to any one of the previous claims, **characterized** in that one or several partial streams are used to control the discharge.

6. Distribution device for discharge of liquid or pulverulent material, comprising a casing (2) with compartments therein; and outlets (7) from each one of the compartments (6), **characterized** in that it further comprises a horizontally positioned rotor unit (8) through which the liquid or pulverulent material is discharged and which shows at least one outlet opening (9) that passes over each compartment (6).

7. Distribution device according to claim 6, **characterized** in that the compartments (6) are essentially equal.

8. Distribution device according to claim 6 or 7, **characterized** in that the liquid material is water or water with suspended or dissolved material therein, like fertilizers, means of control, liming agents or similar.

9. Distribution, device according to any one of claims 6 to 8, **characterized** in that the rotor unit (8) also is used for controlling of the driving of the distribution device (1).

10. Distribution device according to any one of claims 6 to 9, **characterized** in that one or several partial streams are used to guide the dosage.

11. Distribution device according to any one of claims 6 to 10, **characterized** in that the rotor unit is constituted by a single rotor (8).

12. Distribution device according to claims 6 to 11, **characterized** in that the rotor unit is constituted by a rotor (8) and a conduit (18) arranged thereto.

**Revendications**

1. Procédé de distribution d'une matière liquide ou pulvérulente à une pluralité de compartiments (6), dans lequel un flux de liquide ou de matière pulvérulente est divisé en un nombre optionnel de flux partiels prédéterminés bien définis, caractérisé en ce que le flux de matière liquide ou pulvérulente sort d'un rotor disposé horizontalement (8) par au moins un orifice de sortie (9) qui passe au-dessus de la pluralité de compartiments (6) de manière à répartir le flux de matière liquide ou pulvérulente en flux partiels prédéterminés bien définis.

2. Procédé suivant la revendication 1, caractérisé en ce que les flux partiels sont sensiblement égaux.

3. Procédé suivant la revendication 1 ou 2, caractérisé en ce que le flux est de l'eau ou de l'eau contenant une matière en suspension ou en solution, telle que des engrais, des produits de contrôle , des agents de chaulage ou similaires.

4. Procédé suivant la revendication 1 ou 2, caractérisé en ce que le flux est une matière pulvérulente, le rotor étant entraîné extérieurement et les flux partiels étant transférés au moyen d'une circulation d'air.

5. Procédé suivant l'une quelconque des revendications précédentes, caractérisé en ce qu'on utilise un ou plusieurs flux partiels pour commander la distribution.

6. Dispositif de distribution de matière liquide ou pulvérulente, comprenant un caisson (2) à compartiments et des sorties (7) de chacun des compartiments (6), caractérisé en ce qu'il comprend en outre un ensemble tournant disposé horizontalement (8) par lequel la matière liquide ou pulvérulente est distribuée et qui comporte au moins un orifice de sortie (9) qui passe au-dessus de chaque compartiment (6).

7. Dispositif de distribution suivant la revendication 6, caractérisé en ce que les compartiments (6) sont sensiblement égaux.

8. Dispositif de distribution suivant la revendication 6 ou 7, caractérisé en ce que la matière liquide est de l'eau ou de l'eau contenant une matière en suspension ou en solution , telle que des engrais, des produits de contrôle, des agents de chaulage ou similaires.

9. Dispositif de distribution suivant l'une quelconque des revendications 6 à 8, caractérisé en ce que l'ensemble tournant (8) est également utilisé pour commander l'entraînement du dispositif de distribution (1).

10. Dispositif de distribution suivant l'une quelconque des revendications 6 à 9, caractérisé en ce qu'on utilise un ou plusieurs flux partiels pour guider le dosage.

11. Dispositif de distribution suivant l'une quelconque des revendications 6 à 10, caractérisé en ce que l'ensemble tournant est constitué d'un rotor unique (8).

12. Dispositif de distribution suivant les revendications 6 à 11, caractérisé en ce que l'ensemble tournant est constitué par un rotor (8) et un conduit (18) adapté à ce dernier.

**Patentansprüche**

1. Verfahren zum Austragen von einem flüssigen oder pulverförmigen Material zu einer Anzahl von Abteilungen (6), wobei eine Strömung von flüssigem oder pulverförmigem Material in eine gewünschte Anzahl von vorbestimmten und genau definierten Teilströmen aufgeteilt wird, dadurch gekennzeichnet, daß die Strömung von flüssigem oder pulverförmigem Material von einer horizontal angeordneten Rotoreinheit (8) ausgetragen wird durch zumindest eine Auslaßöffnung (9), welche die Anzahl der Abteilungen (6) überstreicht, unter Teilung der Strömung von Flüssigkeit oder pulverförmigen Material in vorbestimmte genau definierte Teilströme.

2. Verfahren nach Anspruch 1, dadurch gekennzeichnet, daß die Teilströme im wesentlichen gleich sind.

3. Verfahren nach Anspruch 1 oder 2, dadurch gekennzeichnet, daß die Strömung aus Wasser besteht oder aus Wasser mit einem darin suspendierten oder gelösten Material wie Düngemittel, Regulierungsmittel, Begrenzungsmittel oder dergleichen.

4. Verfahren nach Anspruch 1 oder 2, dadurch gekennzeichnet, daß die Strömung aus einem pulverförmigen Material besteht, wobei der Rotor extern angetrieben ist und die Teilströme mit Hilfe von einem Luftstrom übertragen werden.

5. Verfahren nach einem der vorstehenden Ansprüche, dadurch gekennzeichnet, daß einer oder mehrere Teilströme verwendet werden, um die Austragung zu steuern.

6. Verteilungseinrichtung für eine Austragung von flüssigem oder pulverförmigem Material, bestehend aus einem Gehäuse (2) mit Abteilungen darin; und Auslässen (7) von jedem der Abteilungen (6), dadurch gekennzeichnet, daß sie weiterhin eine horizontal angeordnete Rotoreinheit (8) aufweist, durch welche die Flüssigkeit oder das pulverförmige Material ausgetragen wird und welche zumindest eine Auslaßöffnung (9) aufweist, welche jede Abteilung (6) überstreicht.

7. Verteilungseinrichtung nach Anspruch 6, dadurch gekennzeichnet, daß die Abteilungen (6) im wesentlichen gleich sind.

8. Verteilungseinrichtung nach Anspruch 6 oder 7, dadurch gekennzeichnet, daß das flüssige Material Wasser ist oder Wasser mit suspendiertem oder gelöstem Material darin, wie Düngemittel, Regulierungsmittel, Begrenzungsmittel oder ähnlichem.

9. Verteilungseinrichtung nach einem der Ansprüche 6 bis 8, dadurch gekennzeichnet, daß die Rotoreinheit (8) desgleichen zur Steuerung des Antriebs der Verteilungseinrichtung (1) verwendet wird.

10. Verteilungseinrichtung nach einem der Ansprüche 6 bis 9, dadurch gekennzeichnet, daß einer oder gewisse Teilströme verwendet werden, um die Dosierung zu führen.

11. Verteilungseinrichtung nach einem der Ansprüche 6 bis 10, dadurch gekennzeichnet, daß die Rotoreinheit durch einen einzelnen Rotor (8) gebildet ist.

12. Verteilungseinrichtung nach den Ansprüchen 6 bis 11, dadurch gekennzeichnet, daß die Rotoreinheit durch einen Rotor (8) und eine Leitung (18) gebildet ist, welche daran angeordnet ist.

FIG. 1

FIG. 2

FIG. 3

FIG. 4